# EUROPEAN PATENT SPECIFICATION

(11) **EP 3 121 728 B1**
(45) Date of publication and mention of the grant of the patent: **16.02.2022**
(21) Application number: 15380031.3
(22) Date of filing: 20.07.2015
(51) Int. Cl.: G06F 11/36

(54) **SYSTEM AND METHOD FOR REMOTELY DEBUGGING A DEVICE**
SYSTEM UND VERFAHREN ZUR BESEITIGUNG AUS DER FERNE VON FEHLERN IN EINER VORRICHTUNG
SYSTÈME ET PROCÉDÉ DE DÉBOGAGE À DISTANCE D'UN DISPOSITIF

(43) Date of publication of application: 25.01.2017
(73) Proprietor: Siemens Rail Automation S.A.U., ES-28760 Tres Cantos (Madrid) (ES)
(72) Inventor: MUNOZ, Maria Saiz, 28940 Fuenlabrada (Madrid) (ES)
(74) Representative: Siemens Patent Attorneys

(56) References cited:
- GB-A- 2 501 135
- US-A1- 2003 097 615
- Mohammed El Shobaki: "Non-Intrusive Hardware/Software Monitoring for Single-and Multiprocessor Real-Time Systems", http://www.es.mdh.se/publications/225-, 1 April 2001 (2001-04-01), pages 1-12, XP055250198, Retrieved from the Internet: URL:http://citeseerx.ist.psu.edu/viewdoc/d ownload?doi=10.1.1.26.5297&rep=rep1&type=p df [retrieved on 2016-02-15]
- HYEONGBAE PARK ET AL: "On-Chip Debug Architecture for Multicore Processor", ETRI JOURNAL, vol. 34, no. 1, 2 February 2012 (2012-02-02), pages 44-54, XP055250202, KR ISSN: 1225-6463, DOI: 10.4218/etrij.12.0111.0172

## Description

The present invention concerns a system and a method for remotely debugging a device, in particular railway devices that might be installed on-board a rail vehicle and/or along a track of a railway network comprising said rail vehicle.

The present invention is in particular directed to software remote debugging of electronic devices that might equip a railway network and/or rail vehicles. When a software failure occurs in an remote device where no access is supplied and no useful diagnosis information regarding the failure is retrieved from microprocessors equipping said device, the current solutions to solve the problem involve trying to reproduce the exact same failure in a laboratory testing environment or to transport the engineering team to the remote device location and try to reproduce the failure. Sometimes the state of the device previous to the failure is unknown and there is then no certainty that the tests carried out for determining and reproducing the failure are the ones that actually caused the failure. The correct debugging may be difficult to find and the process of debugging, finding and correcting the failure may take a lot of time.

Several solutions have been proposed for failure analysis and debugging in different branches of manufacturing industries:
Specifically for software failure analysis, several methods have been proposed to debug code when the program has already crashed, like the post-mortem debugging techniques, printing debugging or special hardware intended for debugging purposes. These techniques work well for a general purpose computer design environment, but are very difficult to implement on embedded designs. For example, modern System on Chip (SoC) implementations include a variety of components, ranging from FPGAs to multi-core environments that interact and generate huge amount of data which cannot be treated as independent. Therefore traditional standalone debugging techniques for each of the components within the embedded platform are an ineffective approach for a real-time debug of applications running on embedded processors and buses.

When trying to debug an embedded system, there are several approaches that might be separated into two groups:
- Hardware Debug: The Software is not considered to be the source of the problem so that the target processors are placed into debug or halted mode and the debugging process focuses on the hardware of the platform;
- Software Debug: The Hardware is not considered to be the source of the problem and, in order to check the software, the debugging process includes registers and memory checks, event monitoring by using breakpoints and trace collection. The software debugging approach tries to analyze the system in a non-intrusive way.

A first example of software debugging approach is the JTAG Debug, which is a debugging technique based on a debug port (supported by most commercial microprocessors). This debugging technique has the following disadvantages: using the debug port, the system must be placed in a debug or halted mode to access registers and embedded memory, and consequently real-time debugging is not possible; it is also a very intrusive debugging method, since a microprocessor needs to change its working mode in order to retrieve information; it has slow performance (Debug and halted modes provide a deficient overall performance therefore no real-time debug can be retrieved using this method); it does not support multi-core platforms; and finally it has a limited level of debug visibility due to serial communication.

Another example of debugging technique, called In-Circuit Instrumentation, has been developed in the last decade. It consists on a set of customized instrumentation blocks embedded on the platform under study and that perceives the embedded system as a whole, increasing thus controllability and observability of the system. An illustration of such a technique is the standard debugging interface called Nexus (or IEEE-ISTO 5001-2003), which proposes debugging interface for embedded system capable of real-time control and debug of multi-processor embedded systems. Unfortunately, the In-Circuit Instrumentation technique implies a connection of each CPU component that might need debugging to a specific In-Circuit Instrumentation client (e.g. Nexus ARM7 or Nexus AHB) which is itself connected to a specific port controller of the In-Circuit Instrumentation in order to transfer data from the failing device by using packet-based protocol. The data of the failing device have thus to be encapsulated in a required format in order to allow a debugging by the In-Circuit Instrumentation, said protocol limiting also the size of the information to be transferred. In other words, the failing device needs to be compliant with the In-Circuit Instrumentation technique that is used.

Other debugging techniques are presented in the following documents: US 2003/0097615, wherein an on-chip logic analysis system captures data processed by signal processing logic core embedded in a single-chip-device without interrupting operations of the signal processing logic core, GB 2 501 135 A , wherein an integrated circuit chip comprises a plurality of peripheral circuits each connected to a respective debug unit, the latter being configured for generating debug information of that peripheral circuit, and wherein a plurality of separate stores are configured for receiving, storing and outputting the debug information, making it accessible for debugging purpose.

Mohammed El Shobaki: "Non-Intrusive Hardware/Software Monitoring for Single-and Multiprocessor Real-Time Systems" discloses a non-intrusive hardware-based monitoring system that can monitor logic-level and system-level events in single/multiprocessor real-time systems.

HYEONGBAE PARK ET AL: "On-Chip Debug Architecture for Multicore Processor" discloses a flexible on-chip debug architecture that embeds a special logic supporting the debug functionality in the multicore processor

An objective of the present invention is to propose a method and a system for real time debugging of embedded systems, that allows a non-intrusive, platform independent debugging, that is free of limitation of the size of data exchanged to a specific protocol (said data being exchanged between the failing device and the system according to the invention), capable of determining if a failure comes from an interaction of components of the platform or of a single component of the platform (i.e. the method and system according to the invention shall enable determining failures arising from an interaction between components as well as failures arising from a single component). According to the present invention, a "non-intrusive debugging" is the capability of visualizing a system any time under any given conditions without modifying the intended behavior of the system.

For achieving said objective, the present invention proposes a debugging module and a debugging method as disclosed by the objects of the independent claims. Other advantages of the invention are presented in the dependent claims.

The present invention concerns a non-intrusive debugging method for enabling a debugging of at least one application running on one or several processors of at least one embedded system that may equip a rail vehicle and/or a track device, the debugging method comprising the steps:
- automatically collecting in real time, by means of a logic component of a debugging module, in particular by means of a single logic component of said debugging module, raw data from each embedded system, wherein said raw data are embedded processor working and/or debugging information usable for debugging the embedded system comprising said processor, said raw data being created and provided by one or several processors and/or components of each embedded system, in particular free of any modification and/or formatting by a device involved in a debugging process;
- providing a debug microprocessor of the debugging module with said raw data by means of the logic component;
- storing said raw data in real time by means of the debug microprocessor, wherein said raw data are in particular classified by the debug microprocessor according to their source, i.e. according to the component and/or component processor which created said data, destination and physical medium and/or protocol used for their transmission;
- receiving a request for an update of the embedded system status from a remote computer. In particular, the remote computer is configured for requesting an update of the embedded system status according to a frequency or periodicity that depends on a size of the debug microprocessor memory and a time needed for completely filling its memory so that no information stored in the debug microprocessor is lost;
- sending to the remote computer and in response to the received request, in particular in real time, a debugging message through a network by means of the debug microprocessor, wherein said debugging message is preferentially sent either periodically and/or upon said request of the remote computer, said debugging message being preferentially an Ethernet debugging message, said debugging message comprising in particular specific raw data requested by the remote computer in its request;
- detecting a failure and/or failure conditions by means of the remote computer from the specific raw data comprised in the debugging message, wherein said failure conditions are in particular parameters or data stored in the remote computer and that allow the prediction of a failure from analysis of the specific raw data by means of the remote computer;
- debugging, preferentially in real time, the embedded system by means of the remote computer connected to said network if a failure and/or failure conditions are detected by the remote computer, the remote computer being able to use said raw data stored in the debugging module for debugging the embedded system;
the debugging method being further characterized in that the debugging module comprises at least two modes of operation, namely a hardware debug mode and a software debug mode as explained below.

The present invention also concerns a platform-independent debugging module for real-time debug of applications running on one or several embedded processors of at least one embedded system, e.g. a remotely located embedded system that may equip a rail vehicle and/or a trackside device and that has to be debugged from a distant control center, said debugging module being notably capable of exchanging data with said embedded system, said debugging module being preferentially configured for being installed or embedded on a SoC of the embedded system, the debugging module according to the invention comprising:
- a logic component, in particular a single logic component, wherein said logic component is configured for automatically collecting in real time raw data from each embedded system, wherein said raw data are embedded processor working and/or debugging information usable for debugging the embedded system comprising said processor in case of failure, said raw data being created and provided by one or several processors and/or components of each embedded system, in particular said raw data are free of any modification and/or formatting by a device involved in a debugging process, the logic component being further configured for providing a debug microprocessor with said raw data; and
- said debug microprocessor, preferentially a single debug microprocessor, wherein the debug microprocessor is configured for storing in real time said raw data according to their source, i.e. according to the component and/or component processor which created said data, destination and physical medium and/or protocol used for their transmission from the embedded system processor and/or component to the logic component in order to allow debugging and processing of said raw data from a remote PC, the debug microprocessor being configured for sending, in particular automatically sending, a debugging message to said remote computer in response to each reception of a request for an update of the embedded system status, wherein said debugging message is preferentially an Ethernet debugging message, wherein said request is sent by the remote computer to the debugging module, said debugging message comprising in particular specific raw data requested by the remote computer in its request, the debugging module being further configured for providing the remote computer with any raw data stored in the debug microprocessor and requested in a request for debugging sent by the remote computer for embedded system debugging purpose;
the debugging module according to the invention being characterized in that it comprises at least two modes of operation, namely a hardware debug mode and a software debug mode as explained below.

Finally, the present invention also concerns an embedded system, e.g. an embedded system of a track device or a device installed on-board a rail vehicle, wherein said embedded system is installed on a SoC, and wherein said SoC is equipped with the previously described debugging module, wherein the debug microprocessor is only dedicated to a debugging task. In other words, the debug microprocessor is a kind of additional processor installed on the SoC for embedded system debugging purpose only. In particular, the resources of the debug microprocessor are only used for debugging purpose. Protection for a debugging system including the embedded system, or a device equipped with the embedded system, the debugging module installed on the SoC of the embedded system, and a remote computer comprising a user interface configured for embedded system debugging from said raw data, wherein the remote computer is in particular configured for requesting an update of the embedded system status according to a frequency or periodicity that depends on a size of the debug microprocessor memory and a time needed for completely filling its memory, is also foreseen.

In particular, the logic component is connected or configured for being connected to each bus and communication channel of the embedded system. The debug microprocessor comprises preferentially at least one external communication port for communicating and exchanging data, e.g. said raw data, with the remote computer. According to the present invention, the debugging module acts as a sniffer, checking all data exchanged between components of the embedded system, and collecting the relevant data in their raw form (original form), enabling thus a non-intrusive process for debugging the embedded system. Indeed, according to the present invention, the raw data are stored in an un-amended form, i.e. in their original form, as created by the embedded system, the debugging module being free of any working/interpretation of said raw data for a debugging purpose. This last feature provides the advantage to the debugging method and system according to the invention that it can be implemented on any embedded platform or system, the debugging being only performed by the remote computer.

Apart from the debug microprocessor and the logic component, the debugging module may comprise at least one among the following components: a microcontroller, a digital signal processing module (DSP), random-access memory (RAM), erasable programmable read-only memory (EPROM), a field-programmable gate array (FPGA), Analog to Digital (A/D) converter, Digital to Analog (D/A) converter, Input/Output module, wherein the components of the debugging module are in particular configured for communicating with each other using serial bus communications, and wherein processing components of the debugging module, such as microprocessors and FPGAs, are dependent on a response of their peripheral components.

The debugging module according to the invention is thus configured for storing all the debugging information sent as raw data by the different processors of the embedded system. In particular, the logic component of the debugging module comprises a dedicated communication port with each microprocessor of the embedded system. In particular, said raw data are platform-based vital information and may comprise all the information related to Communication Processor Module (CPM) registers of the embedded system, and/or communication status registers and/or memory status of the embedded system, and/or operational system events of the embedded system. The logic component is configured for collecting said raw data and forwarding them to the debug microprocessor, which is in charge of storing the raw data, sending an Ethernet debugging message upon request for an update of the status of the embedded system by the remote computer, wherein detecting if an error occurred in the embedded system, and/or predicting the future behavior of the embedded system, notably based on an event history of the embedded system stored within the debugging module, is only carried out by the remote computer.

Preferentially, the debug microprocessor uses a debugging protocol for creating the debugging message, wherein said debugging protocol is platform-independent. In particular, once the debugging message has been sent on the network by the debugging module, then any remote user/developer having access to the debugging module by means of said remote computer can retrieve debugging information via the raw data stored within the debug microprocessor using a user interface, enabling by this way failure observation during first occurrence while avoiding the creation of a testing environment for that purpose. Advantageously, according to the present invention, external debug protocol only interacts with the debug microprocessor, protecting thus the embedded system from external attacks. Indeed, raw data processing and interpretation is, according to the present invention, user-specific and is only implemented on the remote computer hosting the user interface.

According to the present invention, the logic component is able to communicate with each embedded system by using a communication protocol defined for the exchange of information (e.g. said raw data) between the logic component and the concerned embedded system. Advantageously, since the communication protocol is the single feature of the debugging module that is "embedded system"-specific, the debugging module according to the invention may be connected to various embedded systems regardless of the embedded system configuration, enabling a platform-independent debugging by providing platform-independent access to debugging information via its platform-independent debugging protocol. In other words, the present invention proposes to use a platform-independent debugging module using a single debugging protocol and that will get all the embedded system components raw data information via embedded system specific communication protocol.

Preferentially, the logic component is configured for collecting said raw data, notably during a predefined time period, only upon reception of a message sent by a device of the embedded system, wherein said message acts as a trigger of the raw data collection and storage operation. A collection and storage time period is defined within the debugging module in order to avoid over-consumption of the debugging module resources by the devices comprising the embedded system. In this case, the reception of the message by the logic component is in particular configured for triggering the collection and storage of the raw data, and wherein said collection and storage of the raw data is configured for automatically stopping upon reception of the last byte in the message. If the collection and storage of the raw data exceeds the time period before the last byte of the message is encountered, then said collection and storage of the raw data is configured for automatically stopping, and preferentially, takes place again only upon reception of a new message.

Further aspects of the present invention will be better understood through the following drawings, wherein like reference numbers designate like objects:

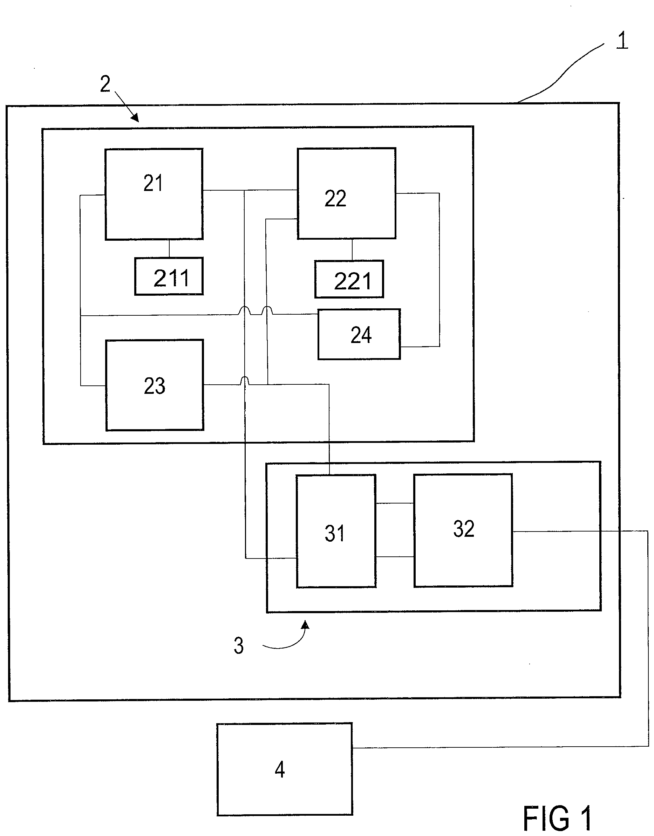

- Figure 1: schematic representation of a debugging module according to the invention.

Figure 1 shows a device 1, e.g. a trackside device or a device installed on-board a rail vehicle, comprising one or several embedded systems 2, each embedded system 2 comprising at least one processor and/or at least one component, wherein said processor and/or component are able to create or provide embedded processor working information and/or debugging information usable for debugging the embedded system. For instance, the embedded system 2 may comprise a first processor 21, a second processor 22, a component 23 (e.g. a communication bus), a shared memory 24, and a first external memory 211 and a second external memory 221.

According to a preferred embodiment of the invention, the debugging module 3 is installed on the SoC on which the embedded system 2 is installed. The debugging module 3 comprises a logic component 31 and a debug microprocessor 32. The logic component 31 is preferentially connected to each processor and/or component of the embedded system that is able to create or provide embedded processor working information and/or debugging information usable for debugging the embedded system. In other words, each communication channel in the embedded system 2 that contains critical information - i.e. said processor working information and/or debugging information - to understand the embedded system as a whole is in particular connected to the logic component 31, which is preferentially configured for checking an availability of a new critical information and sending each new critical information that is available to the debug microprocessor 32, using for instance a transparent protocol over a serial communication, which has the advantage making the exchanged critical information easily traceable. According to the present invention, said critical information is raw data exchanged between the logic component 31 and said processor and/or component of the embedded system. The logic component 31 is for example a decoder and/or a multiplexor.

The debugging module according to the invention comprises said at least two modes of operation:
The first mode of operation is a hardware debug mode. If a remote computer 4 determines, or respectively suspects, from specific raw data comprised in the debugging message that a hardware device of the embedded system is, or respectively might be, the source of a failure, then the remote computer is configured for placing the device 1 equipped with the failing embedded system into a safe state and placing the suspected hardware device into halted mode in order to start debugging using for instance a JTAG port. Preferentially, the debugging module 3 is able to retrieve, in particular on a user-demand, processor registers and memory map according to specifications comprised in a request for debugging sent by the remote computer 4. Upon reception of such a request for debugging, the debugging module 3 is in particular further configured for automatically retrieving bus registers and performance statistics directly from a bus of the embedded system 2, and configured for consulting peripheral memory devices of the embedded system 2.

The second mode of operation is a software debug mode. If the remote computer 4 determines, or respectively suspects, that a software or application of the embedded system 2 is, or respectively might be, the source of a failure, then the debugging module 3 is able to perform at least one of the following actions for debugging purpose, said action being notably automatically triggered by the reception of a request for debugging:
- trace the raw data from embedded buses of the embedded system 2; and/or
- check memory maps and registers of the embedded system 2; and/or
- check internal processor data.

Advantageously, tracing raw data from embedded buses for debugging purpose allows to track the source of each memory access (since bus-monitoring peripherals are configured for tracking the source of each memory access), providing therefore an identification of the processor that made a write, while such an information is usually not accessible from a memory location. Additionally, tracing raw data from embedded buses may provide the sequence and content of the exchanged raw data, which are relevant information for understanding the cause of the failure.

According to the present invention, traceability is preferentially performed using the raw data collected by logic component 31. The debugging module 3 acts as a sniffer, arriving raw data are stored in the debugging module 3 according to their source and destination and the physical medium/protocol used for their transmission. In particular, the debugging module 3 is free of raw data processing performed on the collected raw data for debugging purpose. Indeed, according to the present invention, processing the raw data for debugging purpose is only carried out by a remote computer 4, e.g. according to a user demand, and not by the debugging module 3 itself. The debugging module 3 provides an access to the raw data of the embedded system 2 that is platform independent, said access being preferentially granted upon reception of a request for debugging.

Preferentially, each raw data is displayed by the debugging module 3 in a form of a packet, wherein each packet comprises collected information about the raw datum, in particular including a timestamp that might be added by the debugging module 3, e.g. by the debug microprocessor 32, and that might be a field of the debugging message sent via the network to the remote computer 4. Advantageously, the timestamp gives a hint of the sequence and frequency of the raw data in the embedded system 2.

Preferentially, the debugging module 3 is also able to check memory maps and registers of the embedded system 2 for debugging purpose. In particular, the debugging module 3 comprises a connection to the embedded system 2 that provides direct access to peripheral and microprocessor internal memories of the embedded system.

Preferentially, the debugging module 3 is also able to check internal processor data. When the debugging module 3 is installed on an already existing embedded system 2, then the debugging module 3 is configured for retrieving memory registers and events that are allocated at embedded system microprocessor internal memory and that can be checked by a memory controller of the debugging module 3.

According to the present invention, the debugging module 3 is free of any configuration for debugging processing of the raw data. Indeed, the present invention proposes to transfer the task of processing the raw data for debugging to the remote computer 4. According to the invention, the remote computer 4 comprises a user interface that is an application configured for processing all raw data stored in the debugging module 3 and displaying, in a user-friendly manner, raw data selected by a remote computer user. Advantageously, by processing data on the remote computer's side, the available resources of the debugging module 3 increase, and might be used for the collect and classification of the raw data, enhancing thus the efficiency debugging module 3. According to the present invention, the remote computer 4 is notably configured for requesting, e.g. automatically and/or periodically requesting, for an update of the embedded status and receiving in return the debugging message sent by the debugging module 3. From specific raw data comprised in said debugging message, the remote computer 4 is capable of determining whether a failure already took place or is going to take place. If a failure took place or is going to take place, then the remote computer is configured for sending a request for debugging to the debugging module, wherein upon reception of said request for debugging, the debugging module according to the invention gives the remote computer 4 a complete access to all data stored in the debug microprocessor. Preferentially, the user interface is configured for processing event notifications and alarms if it is determined from the specific raw data comprised in the debugging message that a failure took place or is going to take place. In particular, the user interface comprises a setting option for choosing between the hardware debug mode or the software debug mode of the debugging module 3.

To summarize, the present invention proposes a debugging module 3 configured for being installed on a SoC of an embedded system 2 that is part of a device 1, wherein the debugging module 3 is configured for collecting raw data involved in debugging tasks and providing said raw data to a remote computer 4, wherein the remote computer 4 is configured for carrying out the debugging of the device 1 from the raw data when the embedded system 2 is failing.

## Claims

1. Debugging module (3) for real-time debugging of an application running on one or several embedded processors (21, 22) of at least one embedded system (2), the debugging module (3) comprising:
- a logic component (31) configured for automatically collecting in real time raw data from the embedded system (2), wherein said raw data are embedded processor working information and/or debugging information usable for debugging the embedded system (2), the logic component being further configured for providing a debug microprocessor (32) with said raw data;
- said debug microprocessor (32) configured for storing in real time said raw data, sending a debugging message to a remote computer (4) upon reception of a request for an update of the embedded system status, and providing access to the stored raw data upon reception of a request for debugging the embedded system (2) sent by the remote computer (4);
**characterized in that** the debugging module (3) comprises at least two modes of operation:
a hardware debug mode, wherein if the remote computer (4) determines, or respectively suspects, from raw data comprised in the debugging message that a hardware device of the embedded system is, or respectively might be, a source of a failure, then the debugging module (3) is configured for enabling the remote computer (4) placing a device (1) equipped with the failing embedded system into a safe state and placing said hardware device into halted mode in order to start debugging; and
a software debug mode, wherein if the remote computer (4) determines, or respectively suspects, that a software of the embedded system (2) is, or respectively might be, the source of a failure, then the debugging module (3) is configured for performing at least one of the following actions for debugging purpose:
- trace raw data from embedded buses of the embedded system (2); and/or
- check memory maps and registers of the embedded system (2); and/or
- check internal processor data.

2. Debugging module (3) according to claim 1, configured for being installed or embedded on the SoC of the embedded system.

3. Debugging module (3) according to claim 1 or 2, wherein the debug processor (32) is configured for storing the raw data according to their source, destination and physical medium and/or protocol used for their transmission.

4. Debugging module (3) according to one of the claims 1-3, comprising one and only one logic component (31) and/or one and only one debug microprocessor (32).

5. Debugging module (3) according to one of the claims 1-4, wherein the raw data are data created and provided by one or several processors (21, 22) and/or components (23) of the embedded system (2).

6. Embedded system (2) installed on a SoC, wherein said SoC comprises the debugging module (3) according to one of the claims 1-5.

7. Debugging system comprising an embedded system (2) according to claim 6 and a remote computer (4) for debugging the embedded system (2) from the raw data.

8. Debugging method for enabling a debugging of at least one application running on one or several processors of an embedded system (2), the debugging method comprising:
- automatically collecting in real time, by means of a logic component (31) of a debugging module (3), raw data from the embedded system (2), wherein said raw data are embedded processor working and/or debugging information usable for debugging purpose of the embedded system (2);
- providing a debug microprocessor (32) of the debugging module (2) with said raw data by means of the logic component (31);
- storing said raw data in real time by means of the debug microprocessor (32);
- receiving a request for an update of the embedded system status, wherein said request is sent by a remote computer (4) configured for carrying out a debugging of the embedded system;
- sending to the remote computer (4) and in response to the previously received request a debugging message;
- detecting a failure and/or failure conditions by means of the remote computer (4) and from specific raw data comprised in the debugging message;
- debugging the embedded system by means of the remote computer (4) from said raw data stored in the debugging module (3);
**characterized in that** the debugging module (3) comprises at least two modes of operation:
a hardware debug mode, wherein if the remote computer (4) determines, or respectively suspects, from said specific raw data comprised in the debugging message that a hardware device of the embedded system (2) is, or respectively might be, a source of a failure, then the remote computer (4) is configured for placing a device (1) equipped with the failing embedded system into a safe state and placing said hardware device into halted mode in order to start debugging; and
a software debug mode, wherein if the remote computer (4) determines, or respectively suspects, that a software of the embedded system (2) is, or respectively might be, the source of a failure, then the debugging module (3) is configured for performing at least one of the following actions for debugging purpose:
- trace raw data from embedded buses of the embedded system (2); and/or
- check memory maps and registers of the embedded system (2); and/or
- check internal processor data.

9. Method according to claim 8, comprising collecting raw data by means of a single logic component.

10. Method according to claim 8 or 9, wherein said raw data are created and provided by one or several processors and/or components of the embedded system (2).

11. Method according to one of the claims 8-10, wherein said raw data are said embedded processor working information and/or debugging information free of any modification and/or formatting by a device involved in a debugging process.

12. Method according to one of the claims 8-11, wherein said raw data are classified by the debug microprocessor (32) according to their source, destination and physical medium and/or protocol used for their transmission.

13. Method according to one of the claims 8-12, wherein the remote computer is configured for requesting an update of the embedded system status according to a periodicity that depends on a size of the debug microprocessor memory and a time needed for filling its memory.

## Patentansprüche

1. Debugging-Modul (3) für das Debuggen in Echtzeit bei einer Anwendung, die auf einem oder mehreren eingebetteten Prozessoren (21, 22) mindestens eines eingebetteten Systems (2) läuft, wobei das Debugging-Modul (3) Folgendes umfasst:
- eine Logikkomponente (31), die so konfiguriert ist, dass sie automatisch in Echtzeit Rohdaten aus dem eingebetteten System (2) sammelt, wobei es sich bei den Rohdaten um Betriebsinformationen zum eingebetteten Prozessor und/oder um Debugging-Informationen handelt, die für das Debuggen in dem eingebetteten System (2) nutzbar sind, wobei die Logikkomponente ferner so konfiguriert ist, dass sie einen Debugging-Mikroprozessor (32) mit den Rohdaten versorgt,
- den Debugging-Mikroprozessor (32), der so konfiguriert ist, dass er die Rohdaten in Echtzeit speichert, nach Erhalt einer Aufforderung zur Aktualisierung des Status des eingebetteten Systems eine Debugging-Nachricht zu einem entfernt gelegenen Computer (4) sendet und nach Erhalt einer von dem entfernt gelegenen Computer (4) gesendeten Aufforderung zum Debuggen in dem eingebetteten System (2) Zugriff auf die gespeicherten Rohdaten gewährt,
**dadurch gekennzeichnet, dass** das Debugging-Modul (3) mindestens zwei Betriebsmodi umfasst:
einen Hardware-Debugging-Modus, wobei das Debugging-Modul (3) so konfiguriert ist, dass es, wenn der entfernt gelegene Computer (4) anhand von Rohdaten in der Debugging-Nachricht bestimmt beziehungsweise vermutet, dass es sich bei einer Hardware-Vorrichtung des eingebetteten Systems um die Fehlerquelle handelt beziehungsweise handeln könnte, den entfernt gelegenen Computer (4) in die Lage versetzt, eine mit dem ausgefallenen eingebetteten System ausgestattete Vorrichtung (1) in einen sicheren Zustand und die Hardware-Vorrichtung in einen Unterbrechungsmodus zu versetzen, um mit dem Debuggen zu beginnen, und
einen Software-Debugging-Modus, wobei das Debugging-Modul (3) so konfiguriert ist, dass es, wenn der entfernt gelegene Computer (4) bestimmt beziehungsweise vermutet, dass sich bei einer Software des eingebetteten Systems (2) um die Fehlerquelle handelt beziehungsweise handeln könnte, zu Debugging-Zwecken mindestens eine der folgenden Maßnahmen durchführt:
- Zurückverfolgen von Rohdaten aus eingebetteten Bussen des eingebetteten Systems (2) und/oder
- Überprüfen von Speicherbelegungsplänen und Registern des eingebetteten Systems (2) und/oder
- Überprüfen von internen Prozessordaten.

2. Debugging-Modul (3) nach Anspruch 1, das zum Installieren oder Einbetten in das SoC des eingebetteten Systems konfiguriert ist.

3. Debugging-Modul (3) nach Anspruch 1 oder 2, wobei der Debugging-Prozessor (32) zum Speichern der Rohdaten ihrer Quelle, ihrem Bestimmungsort und ihrem physischen Medium und/oder dem zu ihrer Übertragung benutzten Protokoll entsprechend konfiguriert ist.

4. Debugging-Modul (3) nach einem der Ansprüche 1 bis 3, das nur eine Logikkomponente (31) und/oder nur einen Debugging-Mikroprozessor (32) umfasst.

5. Debugging-Modul (3) nach einem der Ansprüche 1 bis 4, wobei es sich bei den Rohdaten um Daten handelt, die von einem oder mehreren Prozessoren (21, 22) und/oder einer oder mehreren Komponenten (23) des eingebetteten Systems (2) erzeugt und bereitgestellt werden.

6. Auf einem SoC installiertes, eingebettetes System (2), wobei das SoC das Debugging-Modul (3) nach einem der Ansprüche 1 bis 5 umfasst.

7. Debugging-System mit einem eingebetteten System (2) nach Anspruch 6 und einem entfernt gelegenen Computer (4) für das Debuggen in dem eingebetteten System (2) anhand der Rohdaten.

8. Debugging-Verfahren zum Ermöglichen eines Debuggens in mindestens einer Anwendung, die auf einem oder mehreren Prozessoren eines eingebetteten Systems (2) läuft, wobei das Debugging-Verfahren Folgendes umfasst:
- automatisches Sammeln von Rohdaten aus dem eingebetteten System (2) in Echtzeit mithilfe einer Logikkomponente (31) eines Debugging-Moduls (3), wobei es sich bei den Rohdaten um Betriebsinformationen zum eingebetteten Prozessor und/oder um Debugging-Informationen handelt, die für Debugging-Zwecke in dem eingebetteten System (2) nutzbar sind,
- Versorgen eines Debugging-Mikroprozessors (32) des Debugging-Moduls (2) mit den Rohdaten mithilfe der Logikkomponente (31),
- Speichern der Rohdaten in Echtzeit mithilfe des Debugging-Mikroprozessors (32),
- Erhalten einer Aufforderung zur Aktualisierung des Status des eingebetteten Systems, wobei die Aufforderung von einem entfernt gelegenen Computer (4) gesendet wird, der zum Durchführen eines Debuggens in dem eingebetteten System konfiguriert ist,
- Senden einer Debugging-Nachricht zu dem entfernt gelegenen Computer (4) als Reaktion auf die zuvor erhaltene Aufforderung,
- Erkennen eines Ausfalls und/oder von Ausfallbedingungen mithilfe des entfernt gelegenen Computers (4) und anhand bestimmter Rohdaten in der Debugging-Nachricht,
- Debuggen in dem eingebetteten System mithilfe des entfernt gelegenen Computers (4) anhand der in dem Debugging-Modul (3) gespeicherten Rohdaten,
**dadurch gekennzeichnet, dass** das Debugging-Modul (3) mindestens zwei Betriebsmodi umfasst:
einen Hardware-Debugging-Modus, wobei der entfernt gelegene Computer (4) so konfiguriert ist, dass er, wenn er anhand von den bestimmten Rohdaten in der Debugging-Nachricht bestimmt beziehungsweise vermutet, dass es sich bei einer Hardware-Vorrichtung des eingebetteten Systems (2) um eine Fehlerquelle handelt beziehungsweise handeln könnte, eine mit dem ausgefallenen eingebetteten System ausgestattete Vorrichtung (1) in einen sicheren Zustand und die Hardware-Vorrichtung in einen Unterbrechungsmodus versetzt, um mit dem Debuggen zu beginnen, und
einen Software-Debugging-Modus, wobei das Debugging-Modul (3) so konfiguriert ist, dass es, wenn der entfernt gelegene Computer (4) bestimmt beziehungsweise vermutet, dass sich bei einer Software des eingebetteten Systems (2) um die Fehlerquelle handelt beziehungsweise handeln könnte, zu Debugging-Zwecken mindestens eine der folgenden Maßnahmen durchführt:
- Zurückverfolgen von Rohdaten aus eingebetteten Bussen des eingebetteten Systems (2) und/oder
- Überprüfen von Speicherbelegungsplänen und Registern des eingebetteten Systems (2) und/oder
- Überprüfen von internen Prozessordaten.

9. Verfahren nach Anspruch 8, das das Sammeln von Rohdaten mithilfe einer einzelnen Logikkomponente umfasst.

10. Verfahren nach Anspruch 8 oder 9, wobei die Rohdaten von einem oder mehreren Prozessoren und/oder einer oder mehreren Komponenten des eingebetteten Systems (2) erzeugt und bereitgestellt werden.

11. Verfahren nach einem der Ansprüche 8 bis 10, wobei es sich bei den Rohdaten um die Betriebsinformationen zum eingebetteten Prozessor und/oder die Debugging-Informationen ohne Modifikation und/oder Formatierung durch eine an einem Debugging-Prozess beteiligte Vorrichtung handelt.

12. Verfahren nach einem der Ansprüche 8 bis 11, wobei die Rohdaten von dem Debugging-Mikroprozessor (32) ihrer Quelle, ihrem Bestimmungsort und ihrem physischen Medium und/oder dem zu ihrer Übertragung benutzten Protokoll entsprechend klassifiziert werden.

13. Verfahren nach einem der Ansprüche 8 bis 12, wobei der entfernt gelegene Computer zum Anfordern einer Aktualisierung des Zustands des eingebetteten Systems einer Häufigkeit entsprechend konfiguriert ist, die von einer Größe des Debugging-Mikroprozessorspeichers und einer zum Füllen seines Speichers benötigten Zeit abhängig ist.

## Revendications

1. Module de débogage (3) pour le débogage en temps réel d'une application fonctionnant sur un ou plusieurs processeurs intégrés (21, 22) d'au moins un système intégré (2), le module de débogage (3) comprenant :
- un composant logique (31) configuré pour collecter automatiquement en temps réel les données brutes issues du système intégré (2), dans lequel lesdites données brutes sont des informations de travail d'un processeur intégré et/ou des informations de débogage utilisables pour déboguer le système intégré (2), le composant logique étant également configuré pour fournir un microprocesseur de débogage (32) avec lesdites données brutes ;
- ledit microprocesseur de débogage (32) configuré pour stocker en temps réel lesdites données brutes, envoyer un message de débogage vers un ordinateur distant (4) sur réception de la requête d'une mise à jour des statuts du système intégré (2) envoyée par l'ordinateur distant (4) ;
**Caractérisé en ce que** le module de débogage (3) comprend au moins deux modes d'opération :
Un mode de débogage matériel, dans lequel, si l'ordinateur distant (4) détermine ou suspecte, à partir des données brutes contenues dans le message de débogage, qu'un dispositif matériel du système intégré est, ou pourrait être, une source de dysfonctionnement, alors le module de débogage (3) est configuré pour permettre à l'ordinateur distant (4) de placer un dispositif (1) équipé du système intégré défaillant dans un état stable et de placer ledit dispositif matériel dans un mode pause afin de démarrer le débogage ; et
un mode de débogage logiciel, dans lequel, si l'ordinateur distant (4) détermine ou suspecte qu'un logiciel du système intégré (2) est, ou pourrait être, la source d'un dysfonctionnement, alors le module de débogage (3) est configuré pour réaliser au moins l'une des actions suivantes à des fins de débogage :
- tracer les données brutes issues des bus intégrés du système intégré (2) ; et/ou
- vérifier les cartes mémoire et les registres du système intégré (2) ; et/ou
- vérifier les données du processeur interne.

2. Module de débogage (3) selon la revendication 1, configuré pour être installé ou intégré dans un SoC du système intégré.

3. Module de débogage (3) selon la revendication 1 ou 2, dans lequel le processeur de débogage (32) est configuré pour stocker les données brutes en fonction de leur source, destination ou médium physique et/ou protocole utilisé pour leur transmission.

4. Module de débogage (3) selon l'une des revendications 1 à 3, comprenant un et seulement un composant logique (31) et/ou un et seulement un microprocesseur de débogage (32).

5. Module de débogage (3) selon l'une des revendications 1 à 4, dans lequel les données brutes sont des données créées et fournies par un ou plusieurs processeurs (21, 22) et/ou composants (23) du système intégré (2).

6. Système intégré (2) installé sur un SoC, dans lequel ledit SoC comprend le module de débogage (3) selon l'une quelconque des revendications 1 à 5.

7. Système de débogage comprenant un système intégré (2) selon la revendication 6 et un ordinateur distant (4) pour déboguer le système intégré (2) à partir des données brutes.

8. Procédé de débogage pour permettre le débogage d'au moins une application fonctionnant sur un ou plusieurs processeurs d'un système intégré (2), le procédé de débogage comprenant :
- la collecte automatique en temps réel, au moyen d'un composant logique (31) d'un module de débogage (3), les données brutes issues du système intégré (2), dans lequel lesdites données brutes sont un processeur intégré travaillant et/ou déboguant les informations utilisables à des fins de débogage du système intégré (2) ;
- la fourniture au microprocesseur de débogage (32) du module de débogage (2) desdites données au moyen du composant logique (31) ;
- le stockage de données brutes en temps réel au moyen d'un microprocesseur de débogage (32) ;
- la réception d'une requête de mise à jour des statuts du système intégré, dans laquelle ladite requête est envoyée par un ordinateur distant (4) configuré pour effectuer le débogage du système intégré ;
- l'envoi à l'ordinateur distant (4) et en réponse à la requête reçue précédemment d'un message de débogage ;
- détecter un dysfonctionnement et/ou des conditions de dysfonctionnement au moyen de l'ordinateur distant (4) et de données brutes spécifiques comprises dans le message de débogage ;
- le débogage du système intégré au moyen d'un ordinateur distant (4) et à partir de données brutes spécifiques contenues dans le message de débogage ;
**Caractérisée en ce que** le module de débogage (3) comprend au moins deux modes d'opération :
Un mode de débogage matériel, dans lequel, si l'ordinateur distant (4) détermine ou suspecte, à partir des données brutes contenues dans le message de débogage, qu'un dispositif matériel du système intégré est, ou pourrait être, une source de dysfonctionnement, alors le module de débogage (3) est configuré pour permettre à l'ordinateur distant (4) de placer un dispositif (1) équipé du système intégré défaillant dans état stable et de placer ledit dispositif matériel dans un mode pause afin de démarrer le débogage ; et
un mode de débogage logiciel, dans lequel, si l'ordinateur distant (4) détermine ou suspecte qu'un logiciel du système intégré (2) est, ou pourrait être, la source d'un dysfonctionnement, alors le module de débogage (3) est configuré pour réaliser au moins l'une des actions suivantes à des fins de débogage :
- tracer les données brutes issues des bus intégrés du système intégré (2) ; et/ou
- vérifier les cartes mémoire et les registres du système intégré (2) ; et/ou
- vérifier les données du processeur interne.

9. Procédé selon la revendication 8 comprenant la collecte des données brutes au moyen d'un seul composant logique.

10. Procédé selon la revendication 8 ou 9 dans lequel lesdites données brutes sont créées et fournies par un ou plusieurs processeurs et/ou composants du système intégré (2).

11. Procédé selon l'une des revendications 8 à 10, dans lequel lesdites données brutes sont des informations de travail et/ou des informations de débogage libres de toute modification et/ou formatage par un dispositif impliqué dans le processus de débogage.

12. Procédé selon l'une des revendications 8 à 11, dans lequel lesdites données brutes sont classées par le microprocesseur de débogage (32) en fonction de leur source, destination et médium physique et/ou protocole utilisé pour leur transmission.

13. Procédé selon l'une des revendications 8 à 12 dans lequel l'ordinateur distant est configuré pour requérir une mise à jour des statuts du système intégré selon une périodicité qui dépend de la taille de la mémoire du microprocesseur de débogage et du temps nécessaire pour remplir sa mémoire.
